# FASCICULE DE BREVET EUROPEEN

(11) **EP 4 435 984 B1**
(45) Date de publication et mention de la délivrance du brevet: **22.10.2025**
(21) Numéro de dépôt: 24161944.4
(22) Date de dépôt: 07.03.2024
(51) Int. Cl.: H02G 3/08

(54) **PAROI D'ENCEINTE MUNIE D'UN PASSAGE DE CABLE AVEC CAPACITÉ À EMPÊCHER LA PÉNÉTRATION DE POLLUANTS CONFORMÉMENT À LA NORME IP43**
GEHÄUSEWAND MIT KABELDURCHFÜHRUNG ZUR VERHINDERUNG DES EINDRINGENS VON VERUNREINIGUNGEN IN ÜBEREINSTIMMUNG MIT DEM IP43-STANDARD
ENCLOSURE WALL EQUIPPED WITH A CABLE PASSAGE WITH THE ABILITY TO PREVENT THE PENETRATION OF POLLUTANTS IN ACCORDANCE WITH THE IP43 STANDARD

(30) Priorité: 21.03.2023 FR 2302619
(43) Date de publication de la demande: 25.09.2024
(73) Titulaire: Eaton Intelligent Power Limited, D04 Y0C2 Dublin 4 (IE)
(72) Inventeur: CHIMAN, Anand Sattappa, 411014 Pune, Maharashtra (IN); LACOUR, Frédéric, 63670 La Roche Blanche (FR); KARWAT, Ayushi R, 441206 Bramhapuri, Maharashtra (IN)
(74) Mandataire: Epping - Hermann - Fischer

(56) Documents cités:
- EP-A1- 0 248 181
- US-A- 4 449 015

## Description

### DOMAINE TECHNIQUE DE L'INVENTION

La présente invention se rapporte au domaine général du routage de câble(s) traversant une enceinte dans laquelle est logé un composant électrique, par exemple pour son alimentation électrique.

Elle concerne plus particulièrement une paroi d'enceinte qui est munie d'une ouverture pour le passage de câble(s) et qui est configurée pour limiter la pénétration de polluant à partir de cette ouverture selon les critères de la norme internationale IP43 d'étanchéité.

L'invention trouve son application pour tout type d'enceinte dans laquelle un appareil électrique nécessite une protection comparable ou inférieure contre l'exposition à des corps étrangers, par exemple un boitier de dispositif d'éclairage de sécurité.

Document EP 0 248 181 A1, par exemple, concerne une boite à fusibles et de distribution pour véhicules automobiles. Une face avant d'un boitier de la boite à fusibles et de distribution comporte des cavités dans lesquelles des passe-câbles sont insérés. Des faisceaux de câble provenant des consommateurs disposés dans un compartiment moteur sont guidés à travers les passe-câbles dans la boite à fusibles et de distribution, les passe-câbles assurant un effet d'étanchéité.

### ARRIERE-PLAN TECHNIQUE

D'une manière générale, les équipements électriques sont assujettis à un indice de protection, dit indice IP, qui détermine le niveau de protection à respecter contre l'introduction de corps étrangers solides, comme la poussière, et de corps liquides, principalement l'eau sous forme de pluie.

Cet indice IP est plus ou moins sévère en fonction de l'usage et de l'environnement de destination de l'appareil électrique considéré.

Par exemple, dans le domaine de l'éclairage de sécurité, la règlementation impose de disposer des indications lumineuses de balisage à des emplacements stratégiques d'un établissement commercial ou industriel pour guider toute personne vers l'extérieur lors d'une évacuation. Il est notamment requis d'installer un dispositif lumineux au-dessus de chaque porte de sortie de secours.

Un tel dispositif lumineux de sortie de secours se présente de manière connue sous la forme d'un boitier qui intègre des équipements électriques dont au moins un luminaire. La législation impose pour ce type de système d'éclairage un indice IP43 de protection des équipements électriques qui l'intègrent, à savoir une protection à la fois contre les corps solides supérieur à 1mm et contre l'eau pulvérisée à moins de 60° de la verticale. Il s'agit en principe de conformer le boitier de manière à obtenir une étanchéité qui satisfait à la norme.

L'alimentation électrique des équipements électriques du dispositif lumineux de sortie de secours peut être assurée par une batterie intégrée dans le boitier, ou par une source extérieure. En cas d'alimentation par une source extérieure, il est requis la formation d'une ouverture dans une paroi de délimitation du boitier pour permettre l'acheminement d'un ou plusieurs câbles au travers pour atteindre les équipements électriques. Cependant, une telle ouverture constitue un obstacle direct au bon respect de la norme IP43, et doit donc être obturée une fois le câblage installé.

Une solution retenue par les constructeurs consiste à prévoir un organe en caoutchouc qui est fabriqué sur-mesure et intégré au boitier de manière à remplir l'espace existant entre le contour de l'ouverture et le câblage qui la traverse, à la manière d'un œillet.

Cependant, avoir recours à un tel organe fabriqué sur-mesure génère des coûts supplémentaires de production et d'intégration.

L'invention vise à proposer une solution de substitution permettant de garantir le respect de la norme IP43 qui surmonte au moins partiellement les inconvénients identifiés ci-dessus.

### EXPOSÉ DE L'INVENTION

À cet effet, l'invention a pour objet une paroi de délimitation d'une enceinte intérieure prévue pour isoler au moins un équipement électrique d'un milieu extérieur, cette paroi comprenant :
- un panneau dans lequel est formée une ouverture traversante suivant une direction longitudinale ; et
- une goulotte qui délimite conjointement avec le panneau un conduit de cheminement de câble entre le milieu extérieur et l'enceinte intérieure pour raccorder ledit moins un équipement électrique à un élément extérieur, ce conduit s'étendant depuis l'ouverture du panneau formant une embouchure d'entrée jusqu'à une embouchure de sortie débouchant dans l'enceinte intérieure ;
caractérisé en ce que le conduit définit un cheminement de câble serpentin comprenant :
- un coude dans le prolongement longitudinal de l'ouverture qui forme une surface de butée configurée pour empêcher une intrusion de corps étrangers dans l'enceinte intérieure en pénétrant dans l'ouverture depuis le milieu extérieur ou selon la direction longitudinale ; et
- une rampe pour assurer une rétention de liquide dans le conduit par gravité.

L'invention concerne également une paroi ainsi définie, dans laquelle la goulotte comprend une première partie sous la forme d'une gouttière à profil en section en U dont les extrémités sont en affleurement du panneau, cette première partie de goulotte s'étendant orthogonalement à la direction longitudinale et dans le prolongement longitudinal de l'ouverture pour définir le coude du cheminement.

L'invention concerne également une paroi ainsi définie, dans laquelle la goulotte comprend une deuxième partie qui prolonge la première partie de goulotte dans son alignement, cette deuxième partie délimitant conjointement avec le panneau l'embouchure de sortie dans un plan orthogonal à la direction d'étendue de la goulotte pour définir la rampe du cheminement.

L'invention concerne également une paroi ainsi définie, dans laquelle la deuxième partie de goulotte comporte un déflecteur le long de la rampe pour rabattre un corps étranger contre le panneau.

L'invention concerne également une paroi ainsi définie, dans laquelle le panneau comporte une rainure le long de la rampe qui est conformée pour favoriser le rabat du corps étranger par le déflecteur.

L'invention concerne également une paroi ainsi définie, dans laquelle, dans laquelle le panneau et la goulotte sont d'un seul tenant.

L'invention concerne également une paroi ainsi définie, dans laquelle la goulotte est rapportée sur le panneau.

L'invention concerne également un boitier pour isoler au moins un équipement électrique d'un milieu extérieur, comprenant une paroi ainsi définie.

L'invention concerne également un dispositif lumineux de sortie de secours comprenant un boitier ainsi défini, ce dispositif lumineux comprenant un équipement électrique raccordé à un élément extérieur par un câble traversant le boitier, ce boitier comprenant deux panneaux parallèles, dont :
- un panneau de face supportant une enseigne à pictogramme pour indiquer une direction, et
- un panneau de fond dans lequel est formé l'ouverture, ce panneau de fond délimitant le conduit au travers duquel s'étend le câble.

### BRÈVE DESCRIPTION DES DESSINS

D'autres caractéristiques et avantages de l'invention apparaitront au cours de la lecture de la description détaillée qui va suivre pour la compréhension de laquelle on se reportera aux dessins annexés dans lesquels :
- Fig.1 illustre un panneau de fond d'un dispositif lumineux selon une vue extérieure, ce panneau étant munie d'une ouverture selon l'invention ;
- Fig.2 illustre un panneau de face du boitier de bloc lumineux selon une vue extérieure ;
- Fig.3 illustre le panneau de fond suivant une vue depuis l'intérieur du boitier, une goulotte étant agencée sur le panneau de fond pour délimiter conjointement un conduit de passage de câble conformément à l'invention ;
- Fig.4 est une vue de détail de la goulotte de la figure 3 ;
- Fig.5a est une vue en section sur le plan P1 de la figure 3 ;
- Fig.5b est une vue en section sur le plan P2 de la figure 3 ;
- Fig.5c est une vue en section sur le plan P3 de la figure 3 ;
- Fig.6 est une schématique du contour du conduit de passage de câble défini par le panneau de fond et la goulotte ;
- Fig.7 illustre l'insertion d'un câble le long du conduit.

### DESCRIPTION DETAILLEE DE L'INVENTION

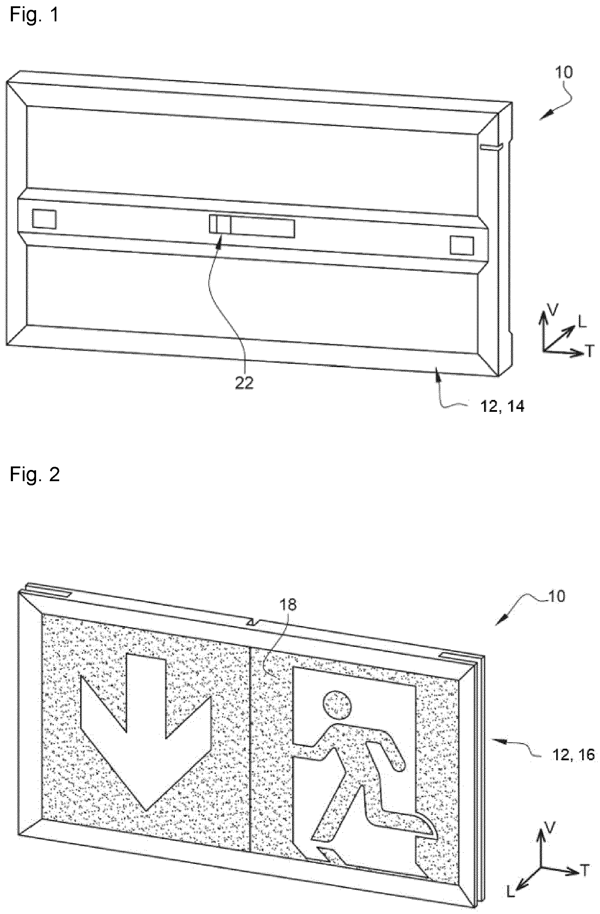

En référence aux figures 1 à 3, un dispositif lumineux de sortie de secours 10 comprend un boitier 12 qui délimite une enceinte intérieure I dans laquelle sont logés des équipements électriques dont au moins un luminaire, avantageusement de type LED.

Dans l'exemple des figures, le boitier 12 se présente sous la forme d'un parallélépipède formé de deux panneaux 14 et 16 sensiblement parallèles, dont un panneau de fond 14 et un panneau de face 16, qui sont emboité l'un dans l'autre.

Une fois le boitier 12 assemblé, les surfaces dites intérieures respectives des panneaux de fond et de face 14, 16 s'étendent en vis-à-vis l'une de l'autre pour délimiter conjointement l'enceinte intérieure I du boitier 12.

Le panneau de face 16 présente en région centrale une fenêtre au niveau de laquelle est disposée une enseigne 18. Dans l'exemple de la figure 2, cette enseigne 18 affiche un pictogramme statique qui représente une silhouette d'un personnage courant à travers une porte ainsi qu'une flèche directionnelle pour indiquer la direction à prendre.

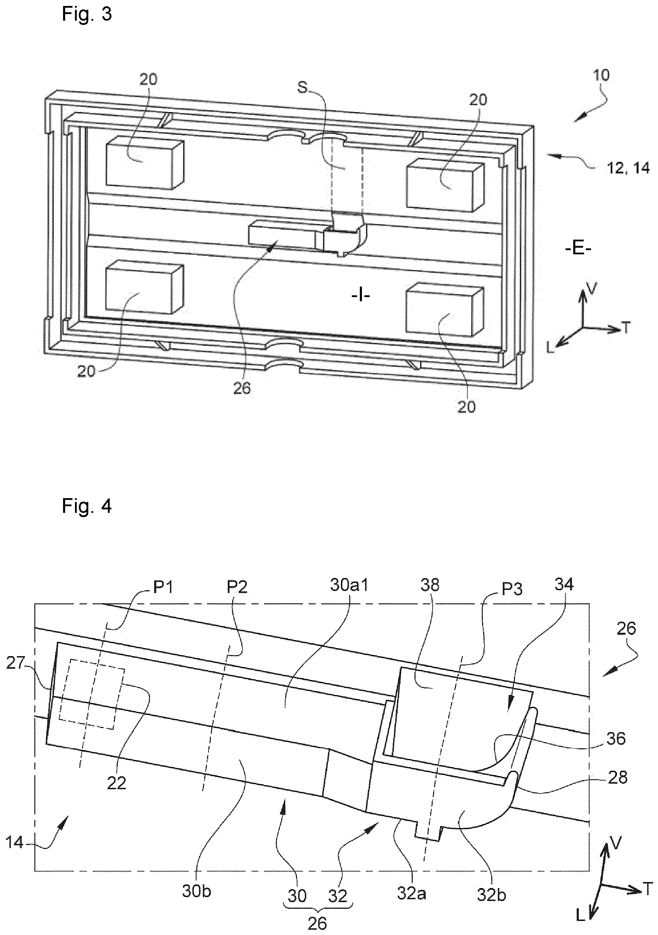

Les équipements électriques, repérés par 20 sur la figure 3, sont portés par le panneau de fond 14, en affleurement de sa surface intérieure. Ils sont avantageusement disposés au niveau des coins du boitier 12. Parmi ces équipements électriques, le ou les luminaires disposé(s) sont orientés vers cette enseigne 18 de manière à la rétroéclairer.

Le dispositif lumineux de sortie de secours 10 est prévu pour être fixé à un mur ou une cloison de sorte que l'enseigne 18 soit visible depuis l'extérieur. A cet égard, le panneau de fond 14 peut comprendre un organe de fixation permettant de fixer le dispositif d'éclairage 1, par exemple au moyen d'une platine de fixation murale ou par vissage direct.

Dans la suite, on adoptera à titre non limitatif les orientations verticale, longitudinale et transversale selon le repère V, L, T indiqué aux figures, en considérant le boitier disposé à la verticale dans un bâtiment, à savoir avec les parois de fond 14 et de face 16 orientées verticalement.

Dans le cadre de l'invention, au moins un des équipements électriques 20 nécessite une connexion filaire avec un élément extérieur au dispositif lumineux de sortie de secours 10. A titre d'exemple non limitatif, une alimentation électrique extérieure au dispositif 10 peut être requise, par exemple pour assurer le fonctionnement du ou des luminaires.

A cet égard, il s'agit de former une ouverture dans le boitier 12 pour permettre un passage de câble. Dans l'exemple des figures, une ouverture 22 est formée au niveau de la région centrale du panneau de fond 14. Cette ouverture 22 est formée traversante dans le panneau de fond 14, suivant la direction dite longitudinale L qui est normal au plan de ce panneau. La taille de cette ouverture 22 est notamment définie en fonction du nombre et du diamètre de câblage nécessaire.

Cette ouverture 22, bien qu'essentielle au routage du ou des câbles, constitue une voie d'intrusion de polluant dans le boitier 12. Comme il est compris, elle expose les équipements électriques à la poussière ou à des projections d'eau, ce qui va à l'encontre des critères d'étanchéité édictés selon la norme IP43 pour ce type de dispositif.

L'idée à la base de l'invention réside dans la volonté de trouver un substitut à l'adjonction d'un organe en caoutchouc venant colmater les espaces résiduels entre l'ouverture 22 et du câblage passant au travers. A cet égard, la particularité majeure de l'invention réside dans la formation d'un conduit 24 dont la morphologie particulière assure une rétention passive de polluant hors de l'enceinte intérieure I.

En référence aux figures 4 à 6, le conduit 24 est délimité conjointement par le panneau de fond 14 et une goulotte 26. Cette goulotte va être décrite en fonction de son emplacement de destination, à savoir quand elle équipe le panneau de fond 14.

La goulotte 26 s'étend globalement suivant la direction transversale en étant bornée par une première et une deuxième cloison d'extrémité 27, 28. Entre les cloisons 27, 28 d'extrémités transversales, la goulotte 26 est conformée en deux parties successives, dont une première partie 30 qui se présente sous la forme d'une gouttière à profil en section en U et une deuxième partie 32 se présentant sous la forme d'un profilé à section en L. La première partie 30 de goulotte est reliée à la première cloison 27, la deuxième partie est reliée à la deuxième cloison 28, et les première et deuxième parties de goulotte sont reliées ensemble entre les cloisons 27, 28 d'extrémités transversales.

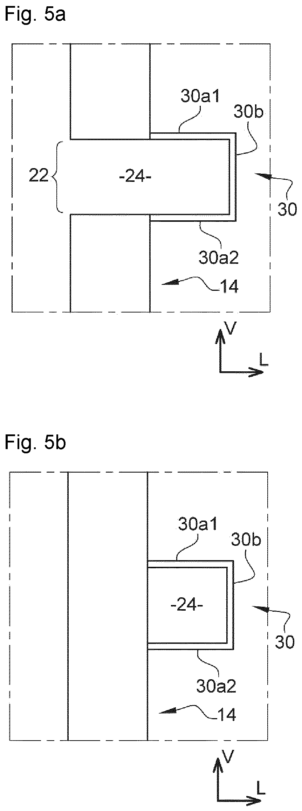

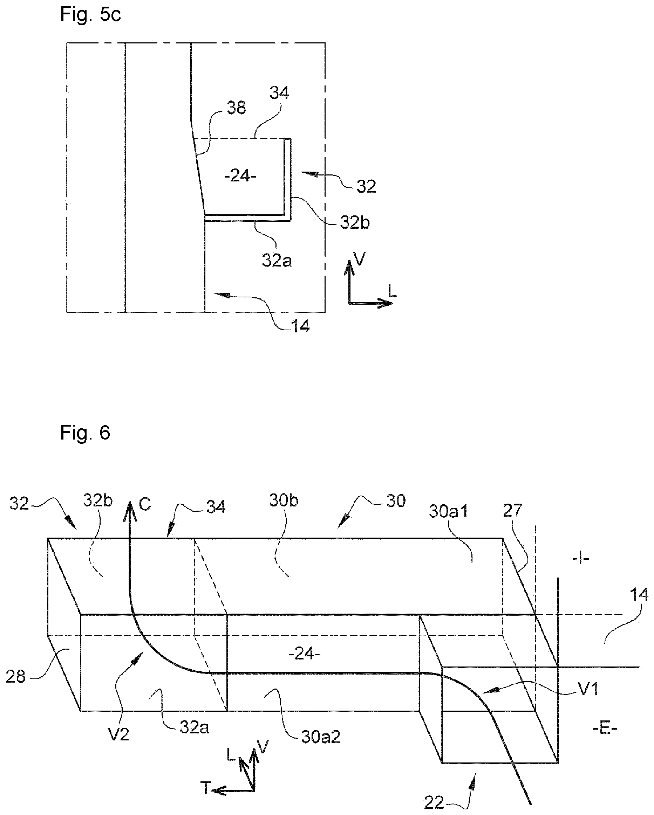

Comme visible en détail sur les figures 5a, 5b et 6, la première partie 30 comporte trois flancs dont deux flancs respectivement supérieur et inférieur 30a1, 30a2, s'étendant orthogonalement à la direction verticale V, et un flanc intermédiaire 30b qui relie les flancs supérieur et inférieur 30a1, 30a2 en s'étendant orthogonalement à la direction longitudinale. Comme il est compris, les flancs supérieur et inférieur 30a1 et 30a2 correspondent aux pattes du U et le flanc longitudinal 30b correspond au secteur central du U.

En particulier, la première partie 30 de goulotte est configurée :
- de manière à s'étendre dans le prolongement longitudinal de l'ouverture 22, comme illustré sur la figure 5a issue d'une coupe suivant un plan repéré par P1 sur la figure 4 ; et
- de sorte que les flancs supérieur et inférieur 30a1, 30a2 sont agencés de part et d'autre de l'ouverture 22 dans la direction verticale.

Avec cet arrangement, l'ouverture 22 correspond à une embouchure d'entrée du conduit 24. Etant donné que la première partie 30 de goulotte s'étend transversalement tandis que l'ouverture 22 s'étend longitudinalement, il est compris que le conduit 24 forme un coude qui impose un cheminement, noté C, comprenant une composante de virage V1, pour avancer le long de celui-ci depuis l'ouverture 22. Le virage V1 est défini comme une transition d'orientation longitudinale-transversale.

En pratique, tout corps étranger s'engouffrant de manière inopinée dans l'ouverture 22 suivant la direction longitudinale va ainsi buter contre le flanc intermédiaire 30b de la première partie 30 de goulotte, l'empêchant d'accéder directement à l'enceinte interne I.

En ce qui concerne la deuxième partie 32 de goulotte, elle comporte deux flancs dont :
- un flanc inférieur 32a, d'orientation normale à la direction verticale, qui prolonge le flanc inférieur 30a2 de la première partie 30 de goulotte ; et
- un flanc latéral 32b, d'orientation normale à la direction longitudinale, qui prolonge le flanc intermédiaire 30a2 de la première partie 30 de goulotte, comme visible en détail sur la figure 5c.

Le fait que cette deuxième partie 32 de goulotte soit dépourvue de flanc dans le prolongement du flanc supérieur 30a1 de la première partie 30 de goulotte conduit ainsi à former, conjointement avec la deuxième cloison d'extrémité 28, une embouchure de sortie du conduit 24, notée 34.

Etant donné que cette embouchure de sortie 34 s'étend dans un plan normal à la direction verticale V, le conduit 24 impose un cheminement C comprenant une seconde composante de virage V2 pour déboucher dans l'enceinte intérieure I. Le virage V2 est défini comme une transition d'orientation transversale-verticale sous la forme d'une rampe ascendante.

D'un point de vue fonctionnel, en admettant qu'une quantité d'eau pénètre dans le conduit 24 par l'ouverture 22, l'effet de la gravité l'empêche d'atteindre l'embouchure de sortie 34. Cette rampe ascendante permet ainsi de s'affranchir d'une intrusion de liquide dans l'enceinte intérieure I depuis le conduit 24.

Au vu de ce qui précède, les virages V1 et V2 confèrent au cheminement C un caractère serpentin entre les embouchures d'entrée et de sortie 22, 34. En principe, de tels virages sont constitutifs de pertes de charges singulières dans le conduit 24, ce qui limite la progression de polluant vers l'enceintes intérieure I. De plus, une intrusion directe de polluant solide ou liquide dans l'enceinte intérieure I est empêchée du fait que les embouchures 22, 34 sont décalées l'une l'autre.

Selon une autre particularité de l'invention, il est visé de fournir une protection supplémentaire en cas d'intrusion de corps solide dans le conduit 24. A cet égard, il est prévu avantageusement de former un déflecteur 36 qui permet de détourner des équipements électriques 20 tout corps solide qui serait amené à pénétrer dans l'enceinte intérieure I par l'embouchure de sortie 34. Ce déflecteur 36 se présente sous la forme d'une paroi arquée qui s'étend entre le flanc latéral 32b de la deuxième partie 32 de goulotte et la deuxième cloison 28, à la manière d'un arrondi à leur interface. Il permet de rabattre un corps solide vers la surface intérieure du panneau de fond 14, au niveau d'une zone S dite de quarantaine, verticalement au-dessus et dépourvue d'équipement électrique 20 comme illustré sur la figure 3. Avec cet arrangement, il est compris que dans le cas critique où un polluant solide parvient à entrer dans l'enceinte intérieure I, les équipements électrique 20 ne sont pas directement exposés.

Complémentairement au déflecteur 36, la surface intérieure du panneau de fond 14 est conformé avec une rainure 38 en regard du flanc latéral 32b de la deuxième partie 32 de goulotte. Le déflecteur 36 est contiguë à cette rainure 38 de manière à guider un corps solide contre celle-ci. Comme visible en détail sur la figure 5c, la rainure 38 est formée de biais avec la direction verticale V pour former une pente qui adoucie l'angle défini entre la surface intérieure du panneau de fond 14 et le flanc inférieur 32a de deuxième partie 32 de goulotte. Cet arrangement favorise le rabat d'un corps solide par le déflecteur 36 contre la surface intérieure du panneau de fond 14.

La goulotte 26 est préférentiellement formée d'un seul tenant avec le panneau de fond 14, par exemple par moulage, de manière à s'affranchir d'une étape d'assemblage.

A noter qu'un assemblage de la goulotte 26 sur le panneau de fond 14 peut également être retenu sans sortir du cadre de l'invention, par exemple par collage, encliquetage ou par visserie. Dans ce dernier cas, la goulotte 26 peut comprendre des pattes de fixation munies d'orifices venant en regard d'orifices correspondants formés au niveau du panneau de fond 14 pour l'insertion de vis. L'assemblage de la goulotte 26 correspond à une étape aisée puisqu'elle intervient avant de positionner le ou les câbles, contrairement à l'adjonction d'un organe en caoutchouc dont la mise en place intervient après la mise en place du câblage pour combler les espaces résiduels.

Aussi, une fabrication en série de la goulotte 26 est permise, ce qui n'est pas le cas d'un organe fabriqué sur-mesure, par définition. En pratique, cette goulotte 26 peut être dimensionnée par rapport à un nombre et un diamètre de câble maximum, lui permettant d'équiper les panneaux de plusieurs gammes de dispositifs lumineux 10. Les couts de fabrication s'en retrouve diminués en comparaison avec le développement et la formation d'un organe sur-mesure pour une application donnée.

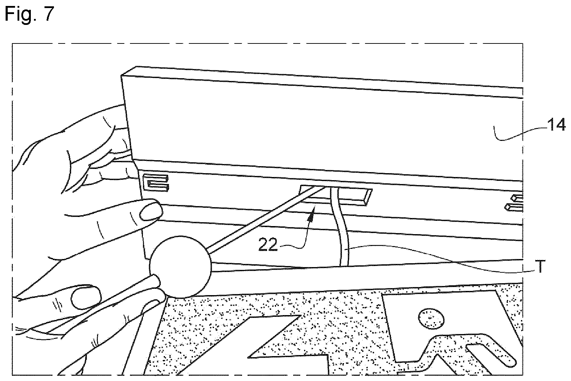

Le routage d'un câble T au travers du conduit 24, comme illustré à la figure 7, est opéré avant l'assemblage des panneaux de fond et de face 14, 16. Il s'agit d'insérer une extrémité du câble dans l'ouverture 22 et de pousser le câble jusqu'à ce que cette extrémité dépasse au niveau de l'embouchure de sortie 34. Il est préconisé d'avoir recours à un outillage, pour guider l'extrémité de câble le long du conduit 24 sans quoi l'opération n'est pas aisée étant donné le caractère serpentin de ce conduit.

L'invention a été décrite comme se rapportant à l'association d'un panneau de fond 14 de boitier 12 d'un dispositif lumineux 10 muni d'une ouverture 22, et d'une goulotte 26 agencée dans le prolongement de l'ouverture 22 pour définir un conduit de cheminement de câble 24.

Il est à noter que l'invention n'est pas limitée à l'arrangement décrit sur la base des figures annexées. En pratique, l'ouverture 22 peut être formée à tout emplacement d'un boitier 12 qui peut comporter une pluralité de panneaux. Comme il est compris, la morphologie de goulotte 26 peut être modifiée au juste besoin en fonction de la position de l'ouverture 22 et de l'orientation générale du boitier 12, notamment par rapport à la direction verticale, dès lors que le conduit 24 définit un cheminement de câble serpentin comprenant :
- un coude dans le prolongement de l'ouverture 22 qui forme une surface de butée configurée pour empêcher une intrusion de corps étrangers dans l'enceinte intérieure I en pénétrant dans l'ouverture depuis le milieu extérieur E ; et
- une rampe pour assurer une rétention de liquide dans le conduit par gravité.

De la même manière, le déflecteur 36 et la rainure 38 peuvent présenter des structures différentes en fonction de l'orientation du boitier 12 dans l'espace et de la position de l'ouverture 22, dès lors que ces éléments assurent le rabat d'un corps étranger contre le panneau 14 au niveau de l'embouchure de sortie 34. Le positionnement des équipements électrique 20 peut être modifié au juste besoin de manière à ne pas se trouver dans la zone S de quarantaine.

Enfin, l'invention a été décrite comme se rapportant à une paroi de délimitation d'un boitier 12 de dispositif lumineux permettant de satisfaire à la norme IP43 à laquelle est soumis ce type de dispositif. Il est à noter que cette paroi, formée de l'association du panneau 14 et de la goulotte 26, n'est pas limitée à cette application particulière. En pratique, elle peut être utilisée pour délimiter toute enceinte intérieure devant se conformer à l'indice de protection IP43 ou un à un indice de degré inférieur en sévérité.

Cette demande de brevet revendique la priorité de la demande de brevet français 2302619.

## Revendications

1. Paroi de délimitation d'une enceinte intérieure (I) prévue pour isoler au moins un équipement électrique (20) d'un milieu extérieur (E), cette paroi comprenant :
- un panneau (14) dans lequel est formée une ouverture traversante (22) suivant une direction longitudinale ; et
- une goulotte (26) qui délimite conjointement avec le panneau (14) un conduit de cheminement de câble entre le milieu extérieur (E) et l'enceinte intérieure (I) pour raccorder ledit moins un équipement électrique (20) à un élément extérieur, ce conduit s'étendant depuis l'ouverture du panneau (14) formant une embouchure d'entrée jusqu'à une embouchure de sortie (34) débouchant dans l'enceinte intérieure (I) ;
**caractérisé en ce que** le conduit définit un cheminement de câble (C) serpentin comprenant :
- un coude dans le prolongement longitudinal de l'ouverture (22) qui forme une surface de butée configurée pour empêcher une intrusion de corps étrangers dans l'enceinte intérieure (I) en pénétrant dans l'ouverture depuis le milieu extérieur (E) ; et
- une rampe pour assurer une rétention de liquide dans le conduit (24) par gravité.

2. Paroi selon la revendication 1, dans laquelle la goulotte (26) comprend une première partie (30) sous la forme d'une gouttière à profil en section en U dont les extrémités sont en affleurement du panneau (14), cette première partie de goulotte (30) s'étendant orthogonalement à la direction longitudinale et dans le prolongement longitudinal de l'ouverture (22) pour définir le coude du cheminement.

3. Paroi selon la revendication 2, dans laquelle la goulotte (26) comprend une deuxième partie (32) qui prolonge la première partie de goulotte (30) dans son alignement, cette deuxième partie (32) délimitant conjointement avec le panneau (14) l'embouchure de sortie (34) dans un plan orthogonal à la direction d'étendue de la goulotte (26) pour définir la rampe du cheminement.

4. Paroi selon la revendication 3, dans laquelle la deuxième partie (32) de goulotte comporte un déflecteur (36) le long de la rampe pour rabattre un corps étranger contre le panneau (14).

5. Paroi selon la revendication 4, dans laquelle le panneau (14) comporte une rainure (38) le long de la rampe qui est conformée pour favoriser le rabat du corps étranger par le déflecteur (36).

6. Paroi selon l'une quelconque des revendications précédentes, dans laquelle le panneau (14) et la goulotte (26) sont d'un seul tenant.

7. Paroi selon l'une quelconque des revendications 1 à 5, dans laquelle la goulotte (26) est rapportée sur le panneau (14).

8. Boitier (12) pour isoler au moins un équipement électrique (20) d'un milieu extérieur (E), comprenant une paroi selon l'une quelconque des revendications précédentes.

9. Dispositif lumineux de sortie de secours comprenant un boitier (12) selon la revendication 8, ce dispositif lumineux comprenant un équipement électrique (20) raccordé à un élément extérieur par un câble (T) traversant le boitier (12), ce boitier comprenant deux panneaux (14 ;16) parallèles, dont :
- un panneau de face (16) supportant une enseigne (18) à pictogramme pour indiquer une direction, et
- un panneau de fond (14) dans lequel est formé l'ouverture (22), ce panneau de fond (14) délimitant le conduit (24) au travers duquel s'étend le câble (T).

## Patentansprüche

1. Begrenzungswand eines Innengehäuses (I), das dazu bestimmt ist, mindestens eine elektrische Vorrichtung (20) von einer Außenumgebung (E) zu isolieren, wobei diese Wand umfasst:
- eine Platte (14), in der eine Durchgangsöffnung (22) in Längsrichtung ausgebildet ist; und
- einen Schacht (26), der gemeinsam mit der Platte (14) einen Kabelführungskanal zwischen der Außenumgebung (E) und dem Innengehäuse (I) abgrenzt, um die mindestens eine elektrische Vorrichtung (20) mit einem äußeren Element zu verbinden, wobei dieser Kanal sich von der Öffnung der Platte (14), die eine Einlassmündung bildet, zu einer Auslassmündung (34) erstreckt, die in das Innengehäuse (I) mündet;
**dadurch gekennzeichnet, dass** der Kanal eine gewundene Kabelführung (C) definiert, umfassend:
- eine Biegung in der Längserstreckung der Öffnung (22), die eine Anschlagfläche bildet, die eingerichtet ist, um ein Eindringen von Fremdkörpern in das Innengehäuse (I) durch Eintreten aus der Außenumgebung (E) in die Öffnung zu verhindern; und
- eine Rampe, um sicherzustellen, dass eine Flüssigkeit durch die Schwerkraft in dem Kanal (24) zurückgehalten wird.

2. Wand nach Anspruch 1, wobei der Schacht (26) einen ersten Teil (30) in Form einer Rinne mit U-förmigem Querschnittsprofil aufweist, deren Enden bündig mit der Platte (14) abschließen, wobei sich dieser erste Teil des Schachts (30) orthogonal zur Längsrichtung und in Längserstreckung der Öffnung (22) erstreckt, um die Biegung der Führung zu definieren.

3. Wand nach Anspruch 2, wobei der Schacht (26) einen zweiten Teil (32) umfasst, der den ersten Teil des Schachts (30) in seiner Ausrichtung verlängert, wobei dieser zweite Teil (32) gemeinsam mit der Platte (14) die Auslassmündung (34) in einer Ebene orthogonal zur Erstreckungsrichtung des Schachts (26) begrenzt, um die Rampe der Führung zu definieren.

4. Wand nach Anspruch 3, wobei der zweite Teil (32) des Schachts einen Ablenker (36) entlang der Rampe umfasst, um einen Fremdkörper gegen die Platte (14) wegzuführen.

5. Wand nach Anspruch 4, wobei die Platte (14) entlang der Rampe eine Nut (38) aufweist, die so geformt ist, dass sie das Wegführen des Fremdkörpers durch den Ablenker (36) erleichtert.

6. Wand nach einem der vorstehenden Ansprüche, wobei die Platte (14) und der Schacht (26) aus einem Stück bestehen.

7. Wand nach einem der Ansprüche 1 bis 5, wobei der Schacht (26) an der Platte (14) angebracht ist.

8. Gehäuse (12) zum Isolieren mindestens einer elektrischen Vorrichtung (20) von einer Außenumgebung (E), umfassend eine Wand nach einem der vorstehenden Ansprüche.

9. Notausgangsbeleuchtungsvorrichtung mit einem Gehäuse (12) nach Anspruch 8, wobei diese Beleuchtungsvorrichtung eine elektrische Vorrichtung (20) umfasst, die über ein durch das Gehäuse (12) verlaufendes Kabel (T) mit einem äußeren Element verbunden ist, wobei dieses Gehäuse zwei parallele Platten (14; 16) umfasst, darunter:
- eine Frontplatte (16), die ein Schild (18) mit einem Piktogramm zur Richtungsangabe trägt, und
- eine Bodenplatte (14), in der die Öffnung (22) ausgebildet ist, wobei diese Bodenplatte (14) den Kanal (24) begrenzt, durch den das Kabel (T) verläuft.

## Claims

1. A boundary wall of an interior enclosure (I) intended to isolate at least one electrical device (20) from an external environment (E), this wall comprising:
- a panel (14), wherein a through-opening (22) is formed in a longitudinal direction; and
- a chute (26) that, together with the panel (14), delimits a cable routing conduit between the external environment (E) and the interior enclosure (I) to connect said at least one electrical device (20) to an external element, this conduit extending from the opening of the panel (14) forming an inlet mouth to an outlet mouth (34) opening into the interior enclosure (I);
**characterised in that** the conduit defines a serpentine cable routing (C) comprising:
- a bend in the longitudinal extension of the opening (22) that forms a stop surface configured to prevent intrusion of foreign bodies into the interior enclosure (I) by penetrating into the opening from the external environment (E); and
- a ramp to ensure liquid retention in the conduit (24) by gravity.

2. The wall according to claim 1, wherein the chute (26) comprises a first part (30) in the form of a gutter with a U-shaped profile in section, the ends of which are flush with the panel (14), this first chute part (30) extending orthogonally to the longitudinal direction and in the longitudinal extension of the opening (22) to define the bend of the routing.

3. The wall according to claim 2, wherein the chute (26) comprises a second part (32) that extends the first chute part (30) in its alignment, this second part (32), together with the panel (14), delimiting the outlet mouth (34) in a plane orthogonal to the direction of extension of the chute (26) to define the ramp of the routing.

4. The wall according to claim 3, wherein the second chute part (32) comprises a deflector (36) along the ramp for deflecting a foreign body against the panel (14).

5. The wall according to claim 4, wherein the panel (14) comprises a groove (38) along the ramp that is shaped to promote the deflection of the foreign body by the deflector (36).

6. The wall according to any one of the preceding claims, wherein the panel (14) and the chute (26) are in one piece.

7. The wall according to any one of claims 1 to 5, wherein the chute (26) is attached to the panel (14).

8. A housing (12) for insulating at least one electrical device (20) from an external environment (E), comprising a wall according to any one of the preceding claims.

9. An emergency exit lighting device comprising a housing (12) according to claim 8, this lighting device comprising an electrical device (20) connected to an external element by a cable (T) passing through the housing (12), this housing comprising two parallel panels (14; 16), including:
- a front panel (16) supporting a sign (18) with a pictogram to indicate a direction, and
- a rear panel (14) in which the opening (22) is formed, this rear panel (14) delimiting the conduit (24) through which the cable (T) extends.
